# EUROPEAN PATENT APPLICATION

(11) **EP 2 179 655 A1**
(43) Date of publication of application: **28.04.2010**
(21) Application number: 09013406.5
(22) Date of filing: 23.10.2009
(51) Int. Cl.: A22C 7/00

(54) **Stackable mold unit for obtaining a molded cooked food product**

(30) Priority: 24.10.2008 US 108267 P
(71) Applicant: Cremona Inoxidable S.r.l., Buenos Aires (AR)
(72) Inventor: Abascal Albizu, Juan Jose, 1439 Buenos Aires (AR); Trinco, Sergio Renato, 1417 Buenos Aires (AR)
(74) Representative: Fernandez Lerroux, Aurelio

(57) **Abstract**

A stackable mold unit for molding and cooking a food product, the mold unit comprising a plurality of adjacent compartments to contain the food product in corresponding food product units, with the stackable mold unit being capable of being stacked on an identical stackable mold unit, wherein the the adjacent compartments being separated by longitudinal inner vertical walls defining a space between adjacent compartments, with the space between adjacent compartmens including flaps defining a fluid flow along the longitudinal inner vertical walls and towards other identical adjacent mold unit and with end walls including opening for the passing of fluid.

## Description

### BACKGROUND OF THE INVENTION

### 1. Field of the Invention.

The present invention relates to the field of industry installations for molding and cooking food products, preferably under the effect of warm and/or cold water and, more particularly refers to a new stackable mold unit of the type employed to contain a meat based food product to be molded, pressed and cooked, and more particularly the invention refers to a new multi-mold unit for use in a cooking installation empoying warm water that may be supplied onto and around a plurality of stacked mold units in a rain or spray pattern, in a raising vapour pattern or in an immersion pattern.

### 2. Description of the Prior Art.

It is well known to use warm or hot water to cook food products and particularly molded products. The installations to manufacture molded and cooked food products are generally comprised of structures capable of handling and stacking mold units or baking moulds which have a stackable capacity. Once these mold units are stacked into a stack formed by a number of stackable molds the stack is conveyed to a big container or tank and warm water is supplied into the container until the stack of mold units are entirely covered by the water. Once the necessary time has passed to guarantee that the food product is properly cooked, the water is pumped away and the stack of molds are removed from the tank.

The molds employed in these installations are well know and are generally comprised of a plurality of adjacent compartments or cells to contain the food product in corresponding food product units. The molds also have guide means to enable each stackable mold unit to be stacked on an identical stackable mold unit located underneath. The adjacent compartments are separated by longitudinal inner vertical walls and transverse inner walls with outer longitudinal or side walls and outer transverse or front walls, defining the perimeter of the mold unit. The design of these walls are such that the warm water, when the stack of molds are immersed in the water tank, may flow through the walls to transfer the heat to the food product. If a better heat transfer is sought, however, the design of these multi-mold units is not good enough to permit a uniform warm water flow through all the cells or compartments.

A stackable unit of the above mentioned type is disclosed in EP 0292417 relating to a stackable set comprising four channels arranged side-by-side and joined by end walls or plates. On each side, a front leg and a rear leg are welded to the outer wall of the outer channel and the legs are straight and slanted; they have a straight vertical central portion, an upper portion slanting outwards and the upper ends of the legs are connected by bars. The faces of the front leg and of the rear leg which face each other comprise stops in order that the set can be stacked and destacked by means of manipulators.

Another stackable unit for supports and containers which is intended to contain and cook hams is disclosed in EP 0463983. This unit is arranged so that, stacked with another unit of the same type, these two units have two stacking positions, whereby in the first position, the superposed bases of chutes of these two units are spaced by a first distance and, in the second position, they are spaced by a second distance which is smaller than the first.

Even another document, EP 1201129, discloses an assembly consisting of a series of moulds on a supporting frame with each mold comprising a U-section trough with a base and side walls which have their upper edges turned outwards and welded together or to the frame. The edges have cut-out sections along the weld lines to create thermal channels and the bases of the troughs have covers on their undersides to exert a pressure on moulds beneath them.

Another stacking unit, disclosed in the EP 1473999, comprises a plurality of chambers or compartments for housing a food product such as ham, during the cooking thereof. Each chamber is provided with a pressing means provided for pressing the food product contained in a corresponding chamber in another identical stacking unit in a lower row. The stacking unit is provided with support means for placing the stacking unit on another identical stacking unit and centering means to permit the lateral positioning of the stacking unit on another identical stacking unit, such that the stacking unit is arranged in the vertical plane above said other stacking unit. The stacking unit of EP 1473999 is provided with guide means to guide the stacking unit when stacking said stacking unit on another identical stacking unit.

All the above stacking mold units are provided with compartments to contain the food product and a several guiding means to guide the units one onto each other but all of the them are designed for a cooking procedure under a bath of warm water for a time long enough to transfer the heat of the water to the food product and cook it. Under these conditions, the water enters in contact with the entire food product through separations between the stacking units. However, while this bath procedure has shown good cooking results the energy consumption necessary to heat a mass of water enough to flood the tank in order to entirely cover the stack of stacked mold units is dramatically high. The design of these stacking units does not provide enough passes and flow spaces to facilitate and enhance thermal transfer. Also, while other low energy cooking methods could be employed by supplying the warm water, in the form of vapour, spray or rain, for example, into a chamber or tunnel, the known stackable mold units are not designed to permit the water supplied as a rain or vapour enter into contact with all the surfaces of the molds and efficiently transfer the heat to the food product which is under cooking.

### SUMMARY OF THE INVENTION

It is therefore an object of the invention to provide a new stackable mold unit for containing a food product to be subject to a cooking procedure under the action of warm or hot water, by immersion or, preferably supplied onto the stacking mold units and product in the manner of a vapour, spray, rain or dripping, wherein the water may fall over the mold units and enter into contact with at least the main surfaces of the molds to transfer the heat of the water to the food product under cooking.

It is still another object of the present invention to provide a new stackable mold unit for containing a food product to be subject to a cooking procedure, wherein the mold unit is provided with openings, channels, flow spaces and gaps, as well as flaps to collect, direct and circulate the water or vapour in a desired pattern of flow circulation.

It is a further object of the present invention to provide a new stackable mold unit for containing a food product to be subject to a cooking procedure, wherein the mold unit is provided with guiding means to facilitate the stacking procedure of the molds to form a stack of stacking mold units.

It is even another object of the present invention to provide a new stackable mold unit or tray capable of being staked into a stack of identical stakable units intended to contain a foodstuff such as ham during a cooking procedure, with each mold unit or tray including a plurality of cells or compartments and pressing means for pressing the foodstuff contained in the cells of another identical mold unit placed below the mold unit in the stack and each unit or tray being provided with openings and flap means in order to enhance the flow of warm water in an immersion cooking procedure and/or to receive and direct a cooking vapour or a raining flow of hot/cold water and cause the water or vapour flow all around and through the stacked trays or mold units containing the foddstuff.

It is a further object of the present invention to provide stackable mold unit for molding and cooking a food product, the mold unit comprising a plurality of adjacent compartments to contain the food product in corresponding food product units, with the stackable mold unit being capable of being stacked on an identical stackable mold unit, wherein the the adjacent compartments being separated by longitudinal inner vertical walls defining a space between adjacent compartments, with the space between adjacent compartmens including flaps defining a fluid or vapour flow along the longitudinal inner vertical walls, downwardly towards the identical mold unit underneath, upwardly towards the identical upper mold unit, and/or longitudinally and/or transversely through the stack of units.

It is a further object of the present invention to provide a stackable mold unit of the type employed to contain a food product to be molded and cooked, the mold unit comprising a plurality of adjacent compartments to contain the food product and guide means to enable the stackable mold unit to be stacked onto another identical stackable mold unit to form a stack of mold units, with the adjacent compartments being separated by longitudinal inner vertical walls defining a space between adjacent compartments, the longitudinal inner vertical walls being joined by an upper portion including at least one opening communicating the compartment with the space between the longitudinal inner vertical walls, the unit including pressing lids below the compartments with the purpose of pressing the food product contained in the compartments of the another identical mold unit positioned immediately below the mold unit in a stack of adjacent stacking units, the stackable mold unit including flap means in at least the space between the longitudinal inner vertical walls, with the flap means directing a fluid flow along the longitudinal inner vertical walls and towards to an adjacent identical mold unit in the stack of mold units, and at least one opening in at least outer end walls and in fluid communication with at least the space between the longitudinal inner vertical walls.

The above and other objects, features and advantages of this invention will be better understood when taken in connection with the accompanying drawings and description.

### BRIEF DESCRIPTION OF THE DRAWINGS

The present invention is illustrated by way of example in the following drawings wherein:
Figure 1 shows a perspective view of a mold unit according to a preferred embodiment of the invention;
Figure 2 shows a side elevational view of the mold unit of Figure 1;

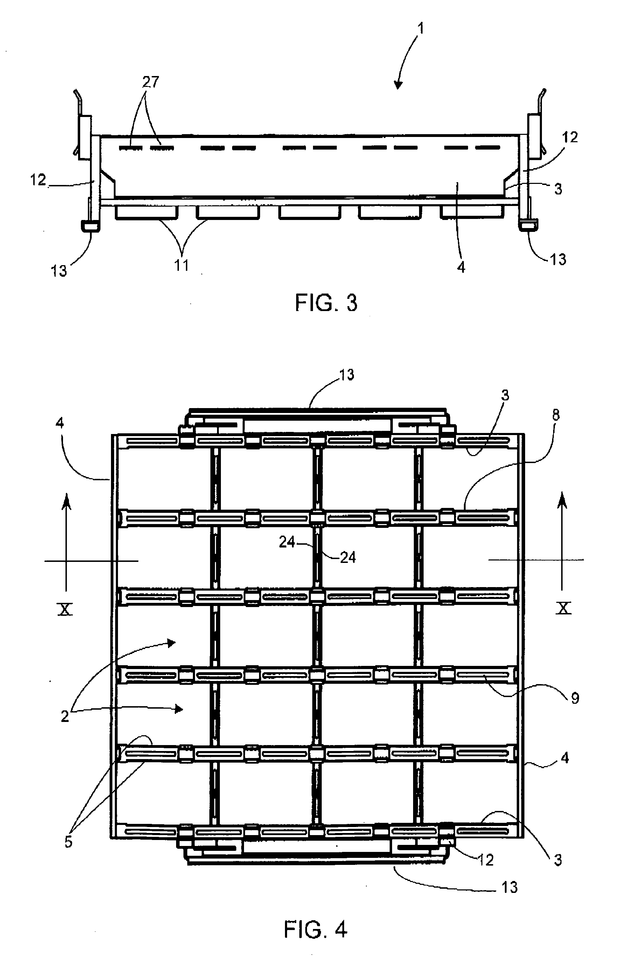

Figure 3 shows a front elevational view of the mold unit of Figure 1;
Figure 4 shows a top plan view of the mold unit of Figure 1;
Figure 5 shows a perspective, partial cross-sectional view of a portion of the mold unit, encircled in circle "A" of Figure 1;
Figure 6 shows a perspective, partial cross-sectional view of a portion of the mold unit, encircled in circle "B" of Figure 1;
Figure 7 shows a perspective view of a stack of mold units of Figure 1;
Figure 8 shows a front elevation, cross-sectional view of the stack of mold units of Figure 7;
Figure 9 shows a cross-sectional view of a portion of the mold unit, encircled in circle "B" of Figure 8;

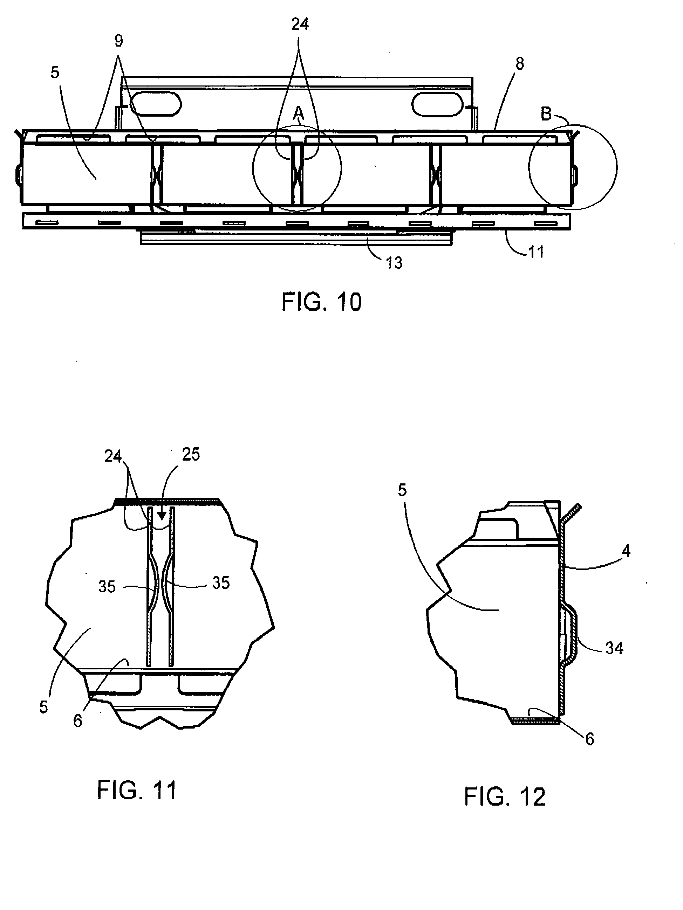

Figure 10 shows a side elevation, cross-sectional view of the mold unit odf the invention, taken along cut-line X-X of Figure 4;
Figure 11 shows a cross-sectional view of a portion of the mold unit, encircled in circle "A" of Figure 10;
Figure 12 shows a cross-sectional view of a portion of the mold unit, encircled in circle "B" of Figure 10;

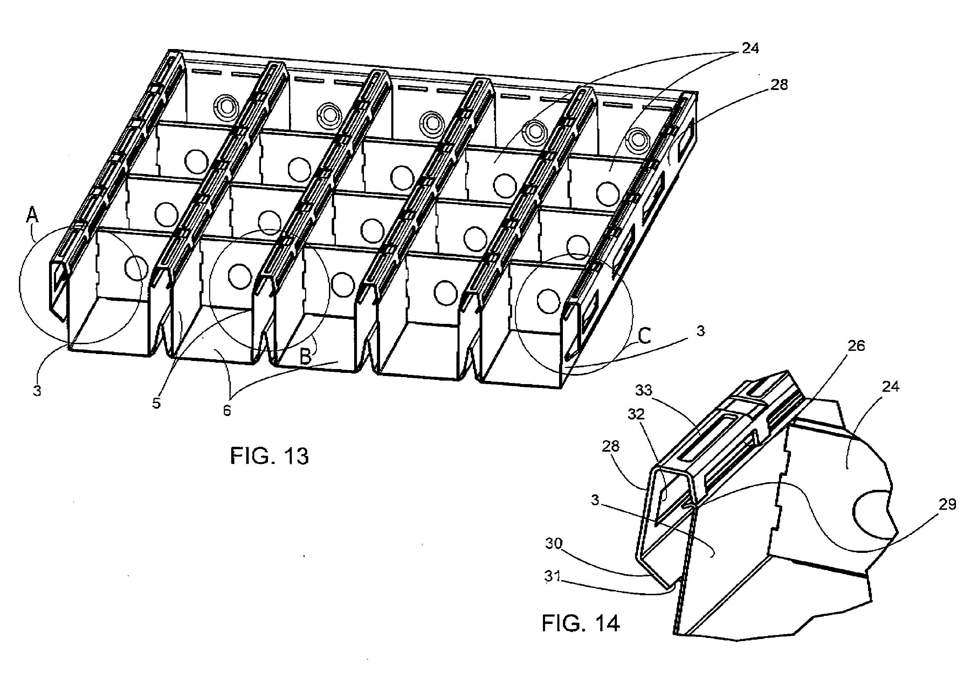

Figure 13 shows a perspective view of the mold unit of Figure 1 that is partially assembled, that is the outer end walls, the flap means and the side guide means have been removed for clarity purposes;
Figure 14 shows a perspective, partial cross-sectional view of a portion of the mold unit, the portion being enclosed in circle "A" of Figure 13;
Figure 15 shows a perspective, partial cross-sectional view of another portion of the mold unit, the portion being enclosed in circle "B" of Figure 13;
Figure 16 shows a perspective, partial cross-sectional view of another portion of the mold unit, the portion being enclosed in circle "C" of Figure 13;
Figure 17 shows a front elevation, cross-sectional schematical view of the mold unit of the invention with arrows indicating a water drainage pattern with the water draining through the several openings, passes and flaps according to the teachings of the invention, and
Figure 18 shows a side elevation, cross-sectional schematical view of the mold unit of Figure 17 with arrows indicating the water drainage pattern according to the teachings of the invention.

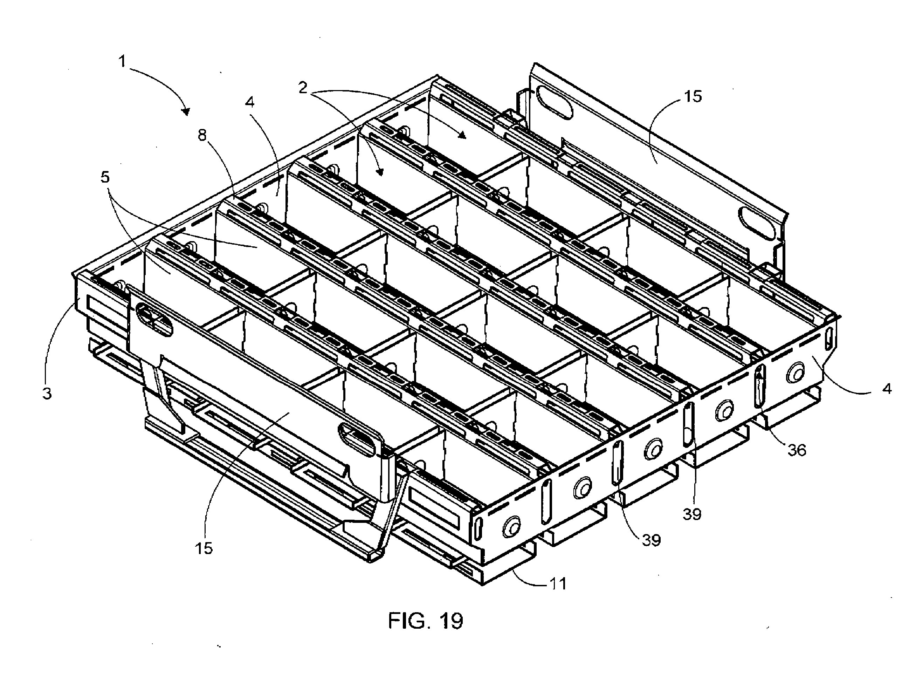

Figure 19 shows a perspective view of a mold unit according to another embodiment of the invention, preferably employed in a vapour cooking process;

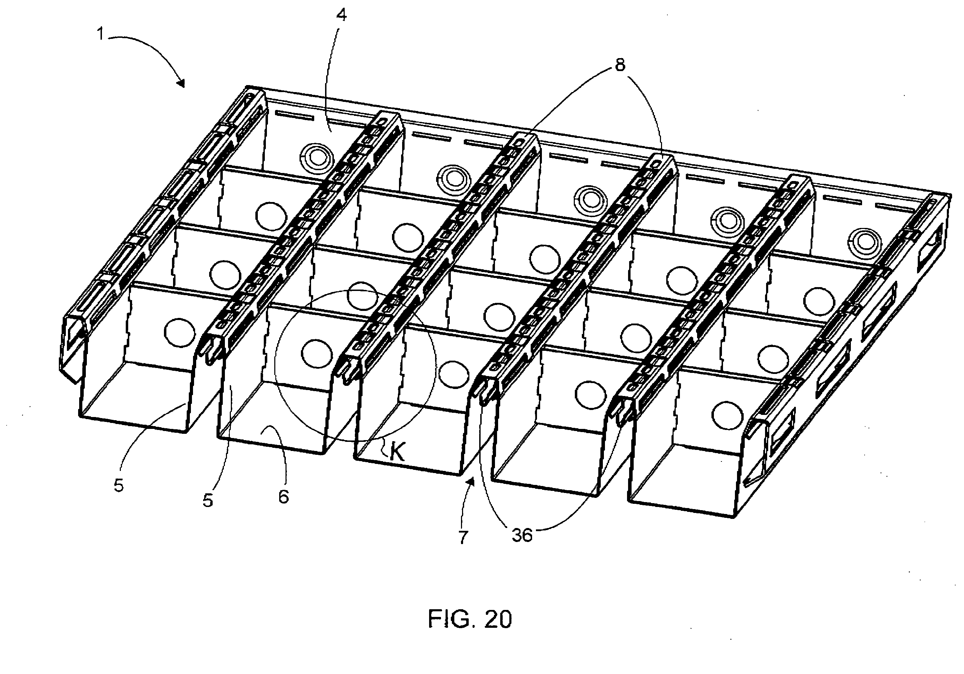

Figure 20 shows a perspective view of the mold unit of Figure 19 that is partially assembled, a front outer end wall and the side guide means have been removed for clear illustration of flap means for directing vapour;

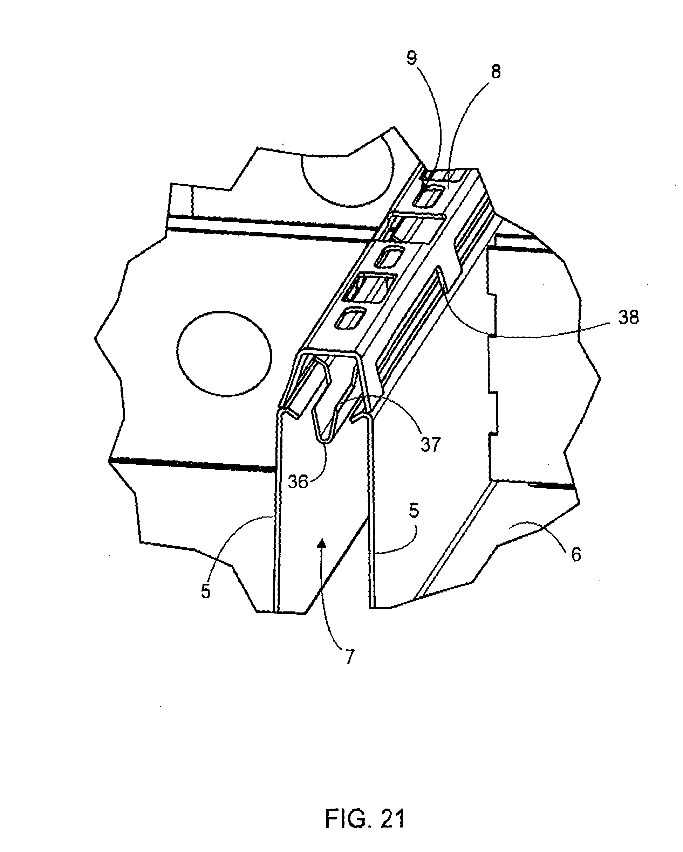

Figure 21 shows a perspective, partial cross-sectional view of a portion of the mold unit, the portion being enclosed in circle "K" of Figure 20;
Figure 22 shows a side elevation, partial cross-sectional view of a stack of mold units of Figure 19 with arrows indicating the vapour flow pattern according to the teachings of the invention;
Figure 23 shows a front elevation, partial cross-sectional view of a stack of mold units of Figure 19 with arrows indicating the vapour flow pattern according to the teachings of the invention;
Figure 24 shows a perspective view of a mold unit according to another embodiment of the invention, preferably employed in a water immersion cooking process;
Figure 25 shows a front elevation, cross-sectional view of a stack of mold units of Figure 24;
Figure 26 shows a cross-sectional view of a portion of the stack of mold units, encircled in circle "D" of Figure 25.

### DESCRIPTION OF THE PREFERRED EMBODIMENTS

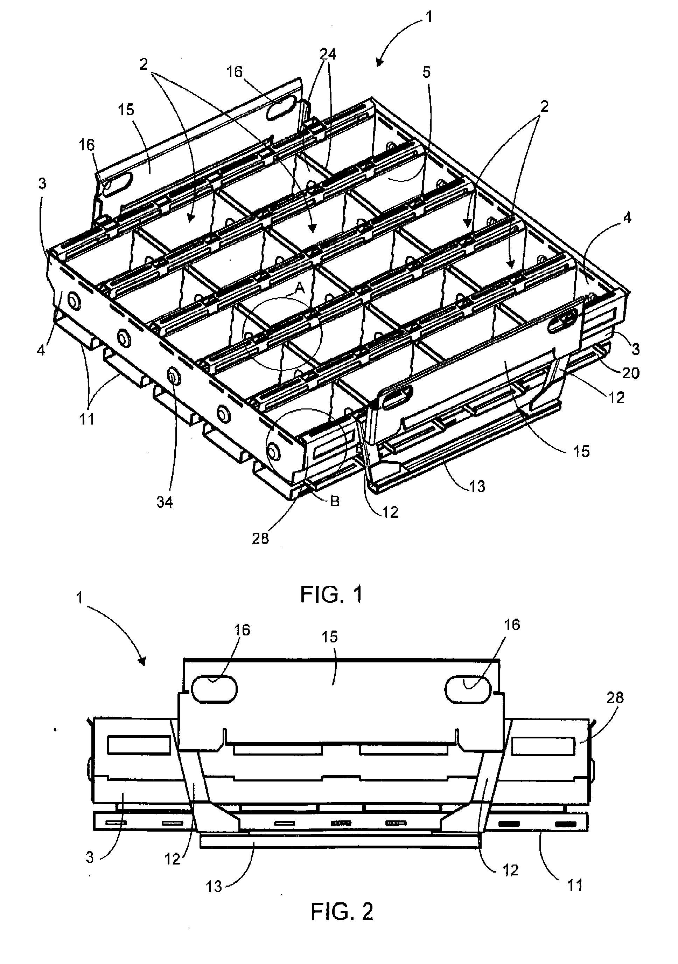

Now referring in detail to the invention, the same refers to the foodstuf industry and more particularly refers to a stackable mold unit or tray, generally indicated by reference number 1 and illustrated in a general perspective top view in Figure 1. The mold unit, or simply mold or multi-mold unit, is of the type employed to contain a food product which is to be pressed, molded and cooked, with the mold unit comprising a plurality of adjacent compartments or cells 2 to contain the food product, wherein each compartment 2 defines a mold for each food product unit, not shown, preferably a meat based product.

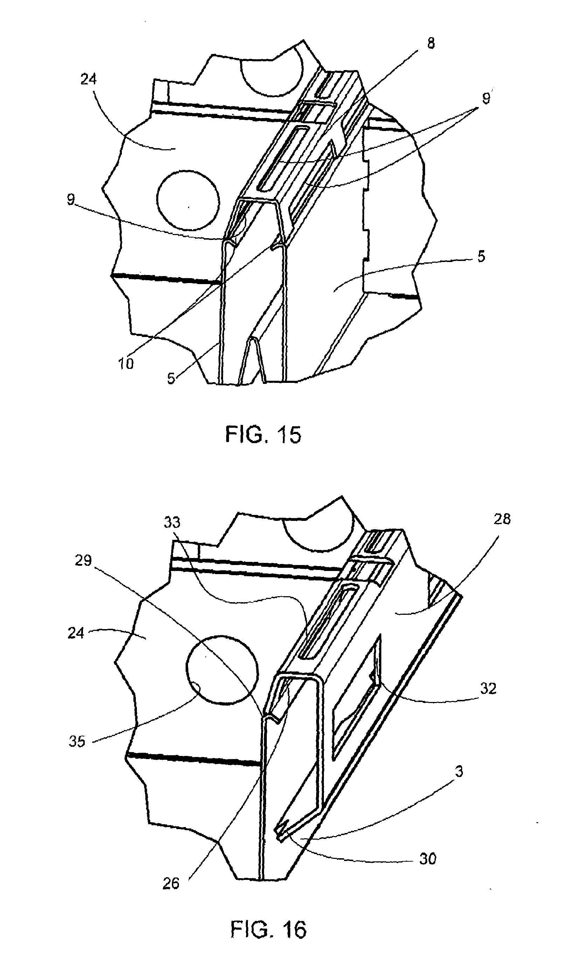

The unit is defined by outer periphearal walls, namely two outer longitudinal vertical walls, also indicated as outer side walls 3, and two outer transverse vertical walls, also indicated as outer end walls 4 which may define rear and front walls. Adjacent compartments 2 are defined and separated by longitudinal inner vertical walls 5 and respective bottom walls 6. Vertical inner walls 5 are separadted defining a space or gap 7 between adjacent compartments and the longitudinal inner vertical walls include an upper portion 8 including at least one opening, and preferably a plurality of openings 9, communicating the compartments 2 with space 7 between the longitudinal vertical walls. Upper portion 8 is an inverted "U" metal strip that is welded to upper edges 10 of vertical walls 5, see Figure 15.

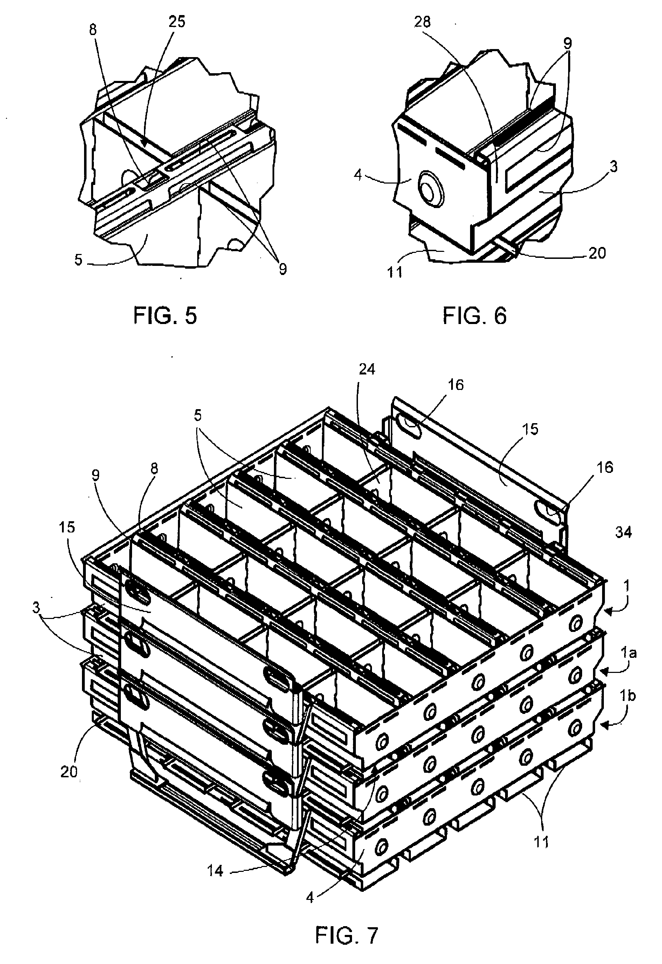

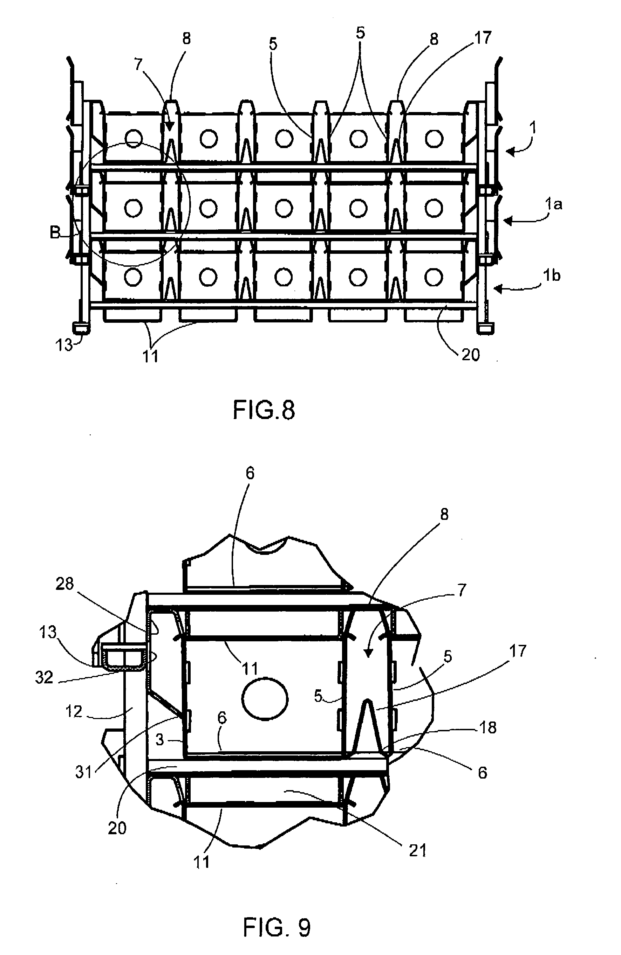

Mold unit 1 includes pressing lids 11 located below the bottom wall of the compartments with the purpose of pressing the food product contained in the compartments of an identical lower mold unit 1a, 1b, as shown in Figures 7 and 8, placed immediately below the mold unit 1. In order to facilitate the stacking of a plurality of units, as shown in Figures 7, 8, each unit is provided with guide means. The guide means are preferably provided in the sides on the unit and comprises an assembly of two inclined bars affixed, directly or indirectly, to each of the two outer longitudinal vertical walls 3. An horizontal bar 13 is affixed to respective lower ends of the inclined bars 12 in order to define a wedging guide means at each side of the mold unit in a manner that the guide means of an upper mold unit remains nested in the guide means of a lower mold unit and a space 14 between adjacent mold units 1, 1a, 1b, are defined. In addition, the guide means include anchoring means, preferably a plate 15 (not shown in Figures 8, 9) with openings 16 for picking up the mold unit, by using a stacking/unstacking machine, for example.

The mold unit of the present invention is desigened and has all the improvements to be employed in any of the three more popular cooking installations, namely a tank for immersion cooking, an installation providing a fluid in a rain or spray pattern, or an installation employing vapour. In any event, warm and/or cold fluid, such as watter, is placed into thermal contact with the food product under cooking and the food product is placed into the mold units with the units into a stack. In an installation working with a rainy pattern, the water that falls over the stack of mold units should drain all around and through the stacked mold units in order to efficiently transfer the temperature, preferably heat, to the food product. To provide an excellent heat transfer the mold unit of the invention is provided with openings and flaps or fluid directing means to direct the water, rainy water or vapour to flow over the walls of the mold unit and the food product to transfer the heat of the water to the food product.

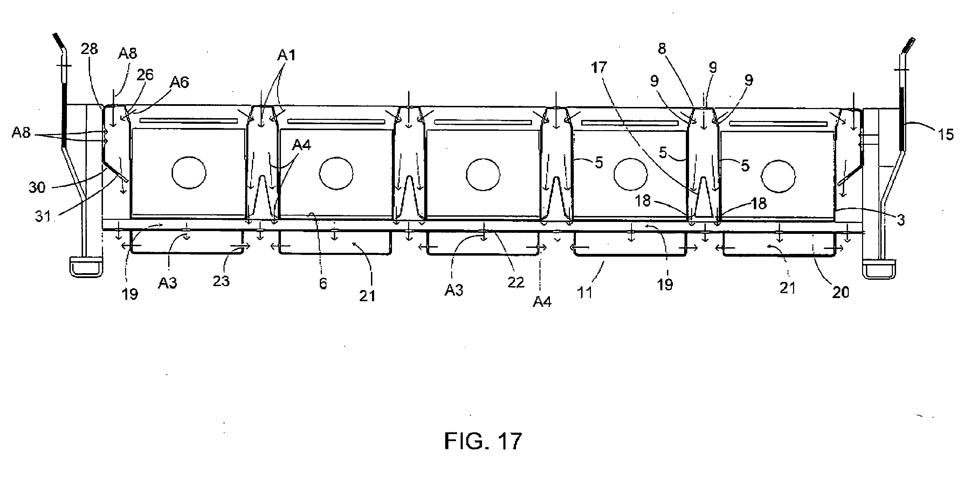

According to one of the embodiments of the invention flap means are provided in at least space 7 between longitudinal inner vertical walls 5 in order to direct a fluid or water flow along and over the longitudinal inner vertical walls and downwardly towards the another identical mold unit positioned immediately below the mold unit. Flap means in space 7 comprises an inverted "V" shaped piece 17 including flap apertures or openings 18 that define a fluid flow circulation adjacent the longitudinal vertical walls and downwardly as indicated by arrows A1, A2 in Figure 17.

This draining water flows downwardly towards transverse fluid circulation channels 19 defined by transverse reinforcing means 20 affixed to bottom wall 6 of said compartments. Transverse reinforcing means comprise "U" shaped trays located below bottom 6 of the compartments and above pressing lids 11. In addition, pressing lids 11 define longitudinal fluid circulation channels 21 located below said transverse fluid circulation channels 19, with the longitudinal fluid circulation channels being in fluid communication with the transverse fluid circulation channels through openings 22 in said "U" shaped trays 20. Therefore, water flows from channels 19 downwardly into channels 21 to transfer heat to the food product that is being pressed by lid 11 into the compartment of the mold unit immediately below in the stack.

In addition to the foregoing, pressing lids 11 include openings 23 in fluid communication with openings 9 in upper portion 8 of the longitudinal inner vertical walls of the another identical mold unit positioned immediately below the mold unit. Thus, water flows, as indicated by arrows A4, out of channels 21 dowwardly towards the unit positioned below in the stack.

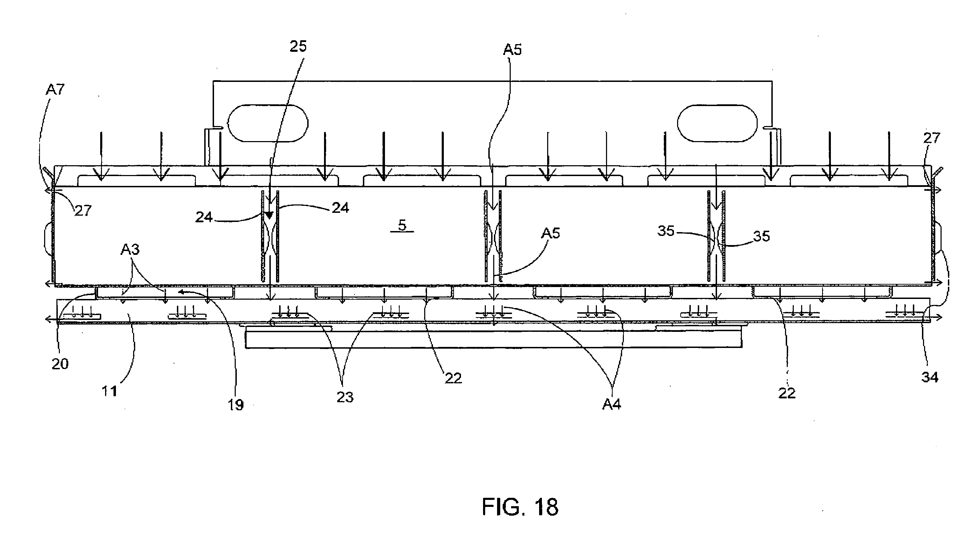

Also with the purpose of providing excellent heat transfer, the mold unit of the invention further includes a plurality of transverse inner double walls 24 defining, together with longitudinal vertical walls 5, the cells or compartments. Transverse inner double walls 24 define an upper continuous opening or openings 25, at a level above a maximum level under which the food product is contained, to place the stackable mold unit in fluid communication with the another identical mold unit positioned immediately below in the stack. Thus, the water will flow as shown by arrows A5 in Figure 18 to transfer the heat to walls 24 and downwardly to channels 19, 21 and the below mold unit.

Outer longitudinal vertical walls 3 and outer transverse vertical or end walls 4 also are provided with upper outer openings 25, 27, respectively, at a level above a maximum level under which the food product is contained to place the compartments of the stackable mold unit in fluid communication with the mold units positioned below in the stack of units. Thus water will flow outside the mold units through openings or apertures 25, 27 as shown by arrows A6, A7, respectively.

Flap means of the invention also include an outer side flap 28 affixed to an upper edge 29 of eah outer longitudinal vertical wall 3 to direct a fluid flow along the outer longitudinal vertical wall and downwardly towards the transverse reinforcing means comprised of the "U" shaped trays 20 and the mold unit positioned immediately below in the stack. Outer side flap 28 comprises an inclined wall 30 with apertures 31, 32, 33 to define a drainage fluid flow adjacent the associated outer longitudinal vertical wall 3. Thus, water will flow as shown by arrows A8 in Figure 17 also cooperating with the heat trasnfer to all the structure of the mold unit and food product. The guide means, particularly inclined bars 12 are affixed, preferably welded, to each outer side flap 28.

Generally, the food product is wrapped into a film or bag and closed by means of end clips, not shown, therefore, outer transverse walls 4 and inner transverse walls 24 are provided with recesses 34, 35, respectively, for receiving the clips of the bags containing the food product.

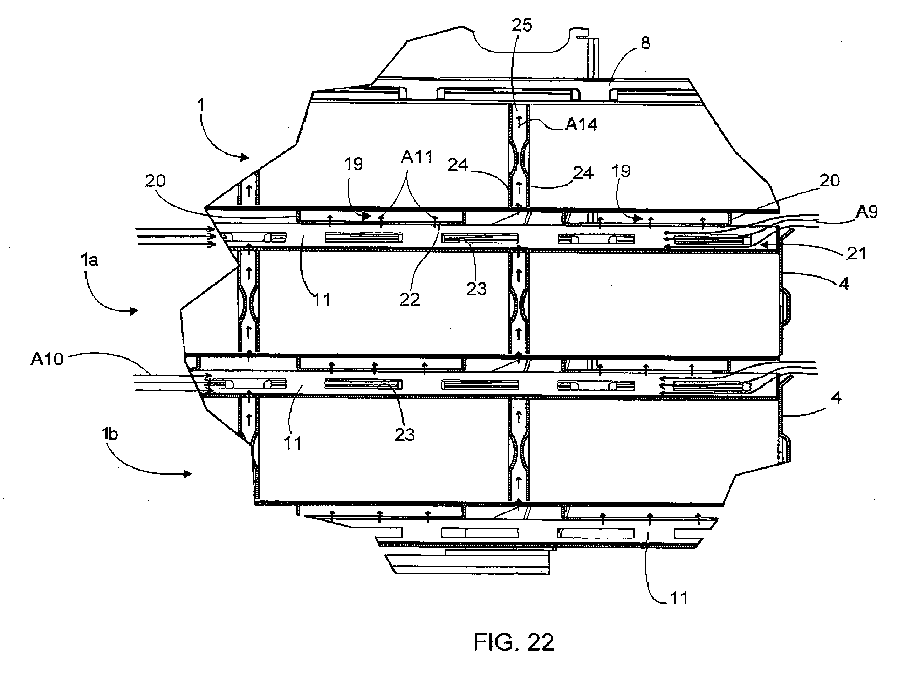

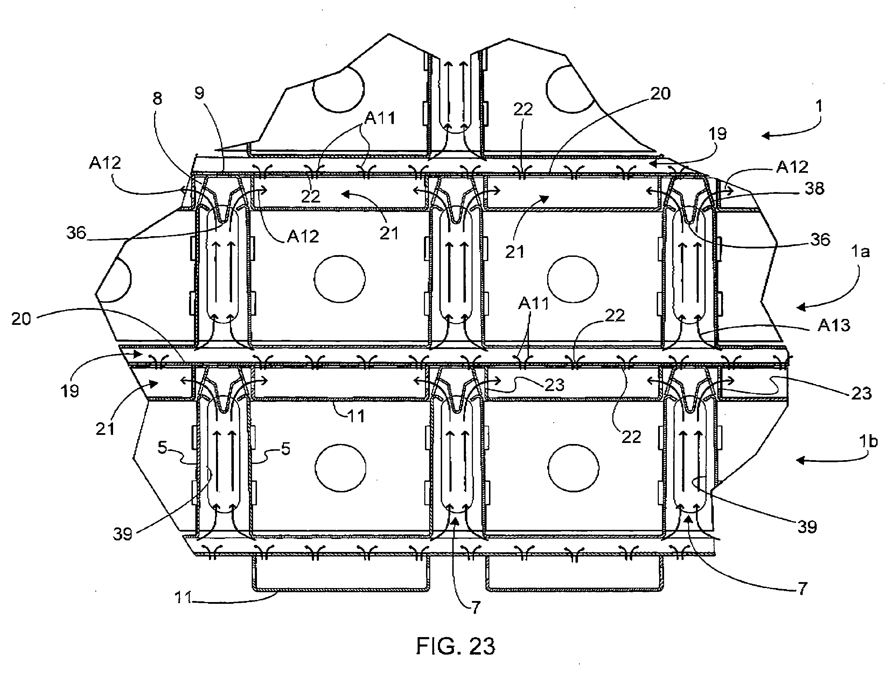

According to another embodiment of the invention, the flap means of mold unit 1 may comprise flap means for directing vapour upwardly and all around the stack of units. Thus, flap means for vapour may comprise a "V" shaped piece 36 that may include apertures, cuts or openings 37 for defining a vapour flow circulation adjacent longitudinal inner vertical walls 5 and upwardly towards an identical mold unit positioned immediately above. As illustrated in Figure22 and 23, the vapour flows as shown by the arrows. Effectively, any vapour flowing horizontally in respect of the stack of units moves as indicated by arrows A9, A10, in the same or opposite directions, through channels 21 into lids 11 and up, into channel 19 through openings 22 in reinforcing trays 20, as shown by arrows A11 in Figures 22 and 23. Flap means 36 also directs the vapour upwardly in the spaces 7, defining a vapour flow circulation adjacent longitudinal inner vertical walls 5, and directing the vapour, as shown by arrows A12, through openings, cuts or apertures 37 into longitudinal fluid circulation channels 21 defined by the pressing lids of the identical mold unit positioned immediately above. The vapour moves upwardly into channel 21, then through openings 22, as shown by arrows A11, into channel 19 and also, as shown by arrows A13, into another space 7 of an upper mold unit, Figure 23. The vapour also moves upwardly through spaces 25, between walls 24, as shown by arrows A14.

Also according to another aspect of the invention, the mold unit includes design aspects that permit the unit to be employed in a cooking installation of the type operating with the staking units immersed into a tank with warm water. To this purpose, at outer end walls 4 are provided with at least one opening and preferably with apertures or openings 39 and 40. Openings 39 and 40 are in fluid communication with at least space 7 between the longitudinal inner vertical walls 5. Indeed, each opening 39 is in fluid communication with each space 7 and preferably aligned with each space 7. Openings 40 are provided to be aligned with a space 41 defined between side walls 3 and side flaps 28.

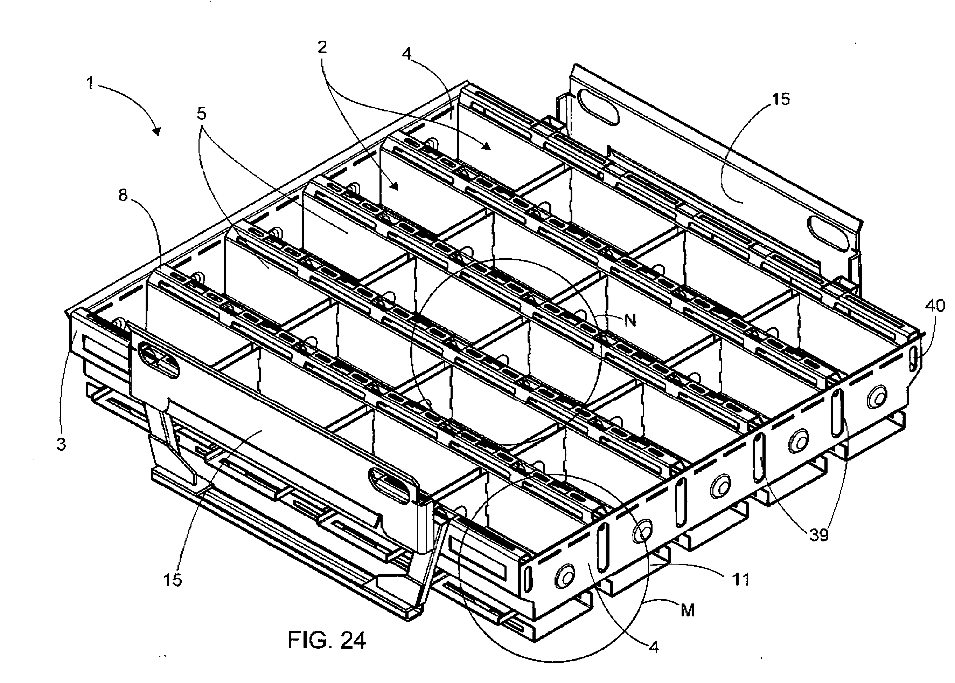

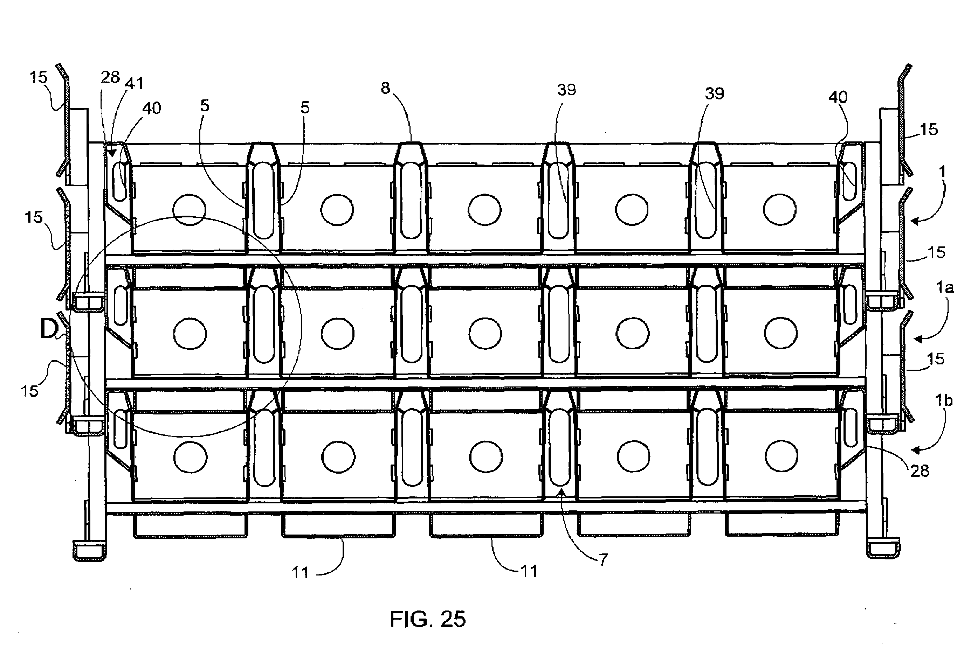

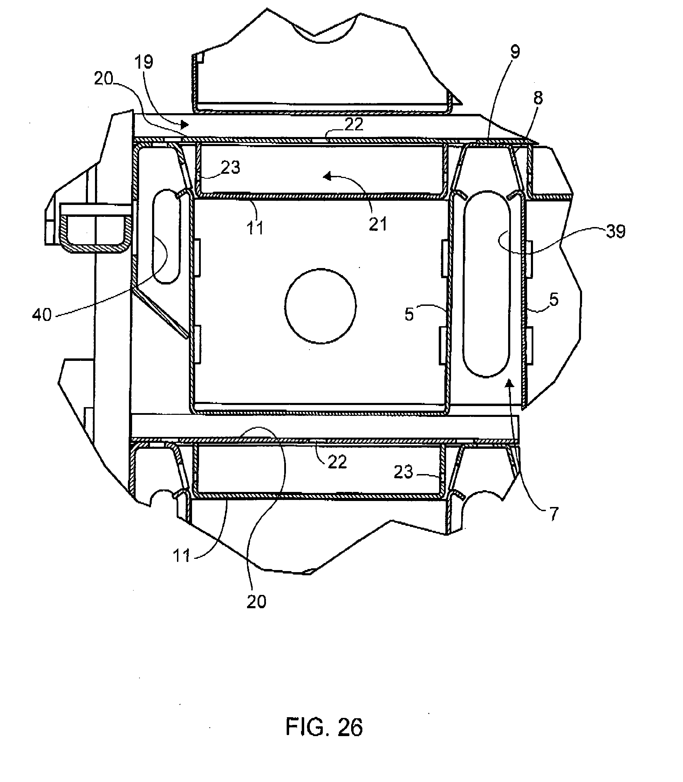

While the anchoring means, such a plate 15, are illustrated in all the mold alternatives, these anchoring means may lack in the units and particularly in the mold unit of Figures 24-26, for use in immersion tanks, to facilitate and enhance the fluid flow through the stacking units. Other anchoring means, for picking up the mold unit, by using a stacking/destacking machine, for example, may be employed.

The mold unit of the invention may be manufactured in any appropriate material but it is preferably made of stainless steel and more particularly is manufactured of folded stainless steel plates and welded parts.

While preferred embodiments of the present invention have been illustrated and described, it will be obvious to those skilled in the art that various changes and modifications may be made therein without departing from the scope of the invention as defined in the appended claims.

## Claims

1. A stackable mold unit of the type employed to contain a food product to be molded and cooked, the mold unit comprising a plurality of adjacent compartments to contain the food product and guide means to enable the stackable mold unit to be stacked onto another identical stackable mold unit to form a stack of mold units, with the adjacent compartments being separated by longitudinal inner vertical walls defining a space between adjacent compartments, the longitudinal inner vertical walls being joined by an upper portion including at least one opening communicating the compartment with the space between the longitudinal inner vertical walls, the unit including pressing lids below the compartments with the purpose of pressing the food product contained in the compartments of the another identical mold unit positioned immediately below the mold unit in a stack of adjacent stacking units, the stackable mold unit including:
flap means in at least the space between the longitudinal inner vertical walls, with the flap means directing a fluid flow along the longitudinal inner vertical walls and towards to an adjacent identical mold unit in the stack of mold units, and
at least one opening in at least outer end walls and in fluid communication with at least the space between the longitudinal inner vertical walls.

2. The stackable mold unit of claim 1, wherein the flap means comprises at least one "V" shaped piece with flap openings defining a fluid flow circulation adjacent the longitudinal inner vertical walls.

3. The stackable mold unit of claim 2, wherein the at least one "V" shaped piece comprise an inverted "V" shaped piece defining a fluid flow circulation downwardly towards the another identical mold unit positioned immediately below and into longitudinal fluid circulation channels defined by the pressing lids.

4. The stackable mold unit of claim 2, wherein the at least one "V" shaped piece includes openings defining a vapour flow circulation adjacent the longitudinal inner vertical walls, upwardly towards an identical mold unit positioned immediately above.

5. The stackable mold unit of claim 2, further including transverse reinforcing means affixed to a bottom wall of said compartments and defining transverse fluid circulation channels.

6. The stackable mold unit of claim 5, wherein said transverse reinforcing means comprise "U" shaped trays located below the compartments and above the pressing lids.

7. The stackable mold unit of claim 6, wherein the longitudinal fluid circulation channels defined by the pressing lids are located below said transverse fluid circulation channels, with the longitudinal fluid circulation channels being in fluid communication to the transverse fluid circulation channels through openings in said "U" shaped trays.

8. The stackable mold unit of claim 7, wherein the pressing lids include openings in fluid communication with the openings in the upper portion of the longitudinal inner vertical walls of the another identical mold unit positioned immediately below the mold unit.

9. The stackable mold unit of claim 1, further including a plurality of transverse inner double walls defining, together with the longitudinal vertical walls, the compartments, with the transverse inner double walls defining upper openings, at a level above a maximum level under which the food product is contained, to place the stackable mold unit in fluid communication with the another identical mold unit positioned immediately below the mold unit.

10. The stackable mold unit of claim 1, further including two outer longitudinal vertical walls and two outer transverse vertical walls, with the outer vertical walls including upper outer openings at a level above a maximum level under which the food product is contained to place the compartments of the stackable mold unit in fluid communication with the another identical mold unit positioned immediately below the mold unit.

11. The stackable mold unit of claims 6 and 10, wherein the flap means include an outer side flap in an upper edge of eah outer longitudinal vertical wall to direct a fluid flow along the outer longitudinal vertical wall and downwardly towards the transverse reinforcing means comprised of the "U" shaped trays and the another identical mold unit positioned immediately below the mold unit.

12. The stackable mold unit of claim 11, wherein the outer side flap comprises an inclined wall with apertures to define a drainage fluid flow adjacent the associated outer longitudinal vertical wall.

13. The stackable mold unit of claims 9 and 10, wherein the transverse inner double walls and the outer transverse vertical walls inludes recesses for receiving clips of bags containing the food product.

14. The stackable mold unit of claim 11, wherein the guide means comprises a pair of inclined bars affixed to each outer side flap of the outer longitudinal vertical walls with an horizontal bar being affixed to respective lower ends of the inclined bars in order to define a wedging guide means at each side of the molde unit.

15. The stackable mold unit of claim 14, wherein the guide means includes anchoring means for picking up the mold unit.

16. The stackable mold unit of claim 1, wherein the unit is made of stainless steel.

17. The stackable mold unit of claim 4, wherein the flap means comprising a "V" shaped piece with flap openings defining a vapour flow circulation adjacent the longitudinal inner vertical walls, defines a circulation into the longitudinal fluid circulation channels defined by the pressing lids of the identical mold unit positioned immediately above.

18. The stackable mold unit of claim 1, wherein the at least one opening in at least outer end walls comprise one opening at each end wall in alignment with each space between the longitudinal inner vertical walls.
